Europäisches Patentamt

European Patent Office

Office européen des brevets

(11) Veröffentlichungsnummer: **0 178 258**
**A1**

## (12) EUROPÄISCHE PATENTANMELDUNG

(21) Anmeldenummer: **85810447.4**

(22) Anmeldetag: **30.09.85**

(51) Int. Cl.⁴: **B 61 F 1/00,** B 62 D 25/20, B 61 D 17/10

(30) Priorität: **11.10.84 CH 4879/84**
**20.12.84 CH 6123/84**

(43) Veröffentlichungstag der Anmeldung: **16.04.86**
**Patentblatt 86/16**

(84) Benannte Vertragsstaaten: **AT BE CH DE FR GB IT LI NL SE**

(71) Anmelder: **SCHWEIZERISCHE ALUMINIUM AG,
CH-3965 Chippis (CH)**

(72) Erfinder: **Neumeier, Erich, Marienstrasse 16,
CH-8003 Zürich (CH)**
Erfinder: **Ritzl, Antal, Albisriederstrasse 363,
CH-8047 Zürich (CH)**
Erfinder: **Siegrist, Max, Rebmoosweg 69, CH-5200 Brugg
(CH)**
Erfinder: **Destefani, Giorgio, Zielackerstrasse 25,
CH-8048 Zürich (CH)**

(54) **Untergestell eines Eisenbahn-Güterwaggons.**

(57) Ein selbsttragendes Untergestell eines Eisenbahn-Güterwaggons weist auf beiden Längsseiten angeordnete Langträger und Untergurten auf.

Zur Gewichtverminderung sowie zur Erleichterung von Zusammenbau und allfälligen Reparaturen sind die Langträger (2) und die Untergurten (3) aus längslaufenden Aluminium-Strangpressprofilen gebildet, und das Untergestell umfasst zwischen den Untergurten (3) angeordnete, längslaufende Bodenelemente (1), bestehend aus stranggepressten Aluminium-Fachwerkprofilen.

Die Strangpressprofile sind bevorzugt mit Schraubennuten zur Schraubbefestigung weiterer Waggonteile versehen.

EP 0 178 258 A1

0178258

## Untergestell eines Eisenbahn-Güterwaggons

Die Erfindung betrifft ein selbsttragendes Untergestell eines Eisenbahngüterwaggons mit auf beiden Längsseiten angeordneten Langträgern und Untergurten.

Eisenbahn-Güterwaggons, welche nicht einen zur Stabilität massgebend beitragenden Aufbaukasten aufweisen, benötigen ein selbsttragendes Untergestell. Ein derartiges Untergestell besteht nach herkömmlicher Bauart aus geschweissten Stahl-Konstruktionen. Eine solche umfasst zwei aus mehreren Teilen zusammengesteckte Langträger, welche durch eine Vielzahl von Querträgern miteinander verbunden sind. Längslaufende Untergurten werden oftmals durch ausserhalb der Langträger angeordnete, im wesentlichen über die gesamte Wagenlänge verlaufende, geschweisste Stahlkonstruktionen gebildet. Zumeist jedoch werden die Untergurtfunktionen durch mehrere, an die Langträger angeschweisste Konsolen erfüllt, welche ihrerseits aus geschweissten Stahlkonstruktionen bestehen. Für die meisten Anwendungen wird über die Querträger eine Holzbeplankung gelegt, vielfach unter Einschub einer Stahlblech-Zwischenlage.
Solche Konstruktionen sind jedoch von erheblichem Gewicht und ihre Fertigung sehr zeitaufwendig.

Die Erfinder haben sich deshalb zum Ziel gesetzt, ein Untergestell vorgenannter Art zu entwickeln, welches zur Gewichtverminderung des Eisenbahn-Güterwaggons beiträgt und mit geringerem Aufwand zu fertigen ist. Ueberdies wurde nach einer Möglichkeit gesucht, beim Güterwaggonbau ein weitgehendes Baukastensystem aufzustellen. Dies soll die Flexibilität beim Bau von Waggons vom gleichen Grundtyp,

0178258

aber mit unterschiedlichen Detailausführungen, fördern. Insbesondere sollen leichtlösbare Verbindungen mit weiteren Waggonteilen, wie Fischbauch, Achshalter, Federböcke, Kupplungskasten, Rangierhaken, Schiebetürenschienen u.a. ermöglicht werden, was zur wesentlichen Erleichterung des Zusammenbaus, bzw. von Reparaturen beitragen würde.

Zur Lösung dieser Aufgabe führt, dass bei einem Untergestell obgenannter Art zwischen den Untergurten längslaufende Bodenelemente eingesetzt sind, welche aus stranggepressten Aluminium-Fachwerkprofilen bestehen, sowie dass auch die an den Bodenelementen befestigten Langträger und die Untergurten aus längslaufenden Aluminium-Strangpressprofilen gebildet sind. Der erfindungsgemässe Einsatz solcher Bodenelemente zusammen mit den Langträgern und Untergurten ermöglichen zusammen mit dem üblichen Fischbauch eine selbsttragende Konstruktion, welche überdies, mit Ausnahme des Achshalterbereichs, ohne Querträger auskommt. Die Verbindung der genannten Untergestell-Bestandteile kann aufgabengemäss auf einfache Weise, durch automatisches Schweissen, Nieten oder Schrauben erfolgen. Ein weiterer Vorteil der stranggepressten Profile besteht darin, dass Vorrichtungen zur Befestigung weiterer Waggonteile integierbar sind. Demgemäss liegt im Rahmen der Erfindung, dass die Langträger und die Untergurten mit Schraubennuten versehen sind. Damit können Untergestell-Teile, wie Fischbauch oder Achshalter direkt, ohne mechanische Bearbeitung angeschraubt werden. Eine weitere Ausgestaltung des erfindungsgemässen Baukastensystems liegt im Vorsehen einer Halteschiene, welche ebenfalls aus einem stranggepressten Aluminiumprofil gebildet wird, ihrerseits Schraubennuten aufweist und an der Unterseite der Untergurten angeschraubt

0178258

wird. Die Halteschiene ist derart gestaltet, dass daran je nach Bedarf Schiebetürenschienen, Rangierhaken u.a.m befestigt werden können.

Schraubverbindungen nehmen in der Verwirklichung des Baukastengedankens eine Vorzugstellung ein. Hierbei ist jedoch zu beachten, dass im Schienenfahrzeugbau axiale Zugbeanspruchung von Schrauben vielfach vermieden werden müssen. Dem Rechnung tragend, weisen die erfindungsgemässen Strangpressprofile der Langträger, Untergurten und Halteschienen in der Nähe der Schraubverbindungsstellen integrierte Ausbildungen auf, welche parallel zu den Schraubenachsen auftretende Zugspannungen aufzunehmen vermögen. Solche Ausbildungen können beispielsweise die Form von Nasen und Nuten besitzen, welche ein stückweises Ineinanderschieben der mittels Schrauben zu verbindenden Waggonteile dergestalt erlauben, dass die Schrauben von einer Zugbeanspruchung entlastet werden. Eine derartige Verhakung ist insbesondere für die Verbindung von Untergurt und Halteschiene vorgesehen. Eine weitere erfindungsgemässe Konstruktion zur Entlastung der Schrauben besteht im Vorsehen paarweise senkrecht anzubringender Schrauben. Dies wird bevorzugt bei der Befestigung der horizontal und vertikal beanspruchten Achshaltern an den Langträgern angewandt, indem die Langträger sowohl an der waagrechten Unterseite als auch an einer senkrechten Seitenfläche mit in das Strangpressprofil integrierten Schraubennuten versehen sind.

Dank der erfindungsgemässen Konstruktion kann auf Querträger verzichtet werden. Eine Ausnahme bildet der Bereich der Achshalter. Die dort anzubringenden Querträger werden bevorzugt angeschraubt.

0178258

Eine zweckmässige Ausgestaltung des Waggonbodens besteht darin, dass die zwischen den Langträgern angeordneten Bodenelemente mit einer Holzbeplankung bedeckt sind. Zur Belüftung des Berührungsgebietes Holz/Aluminium sind die Holzplanken bevorzugt mit längslaufenden Nuten ausgestattet.

Damit zur Befestigung der Holzplanken der Aluminium-Fachwerkboden nicht angebohrt werden muss, sind in weiterer Ausnutzung der Möglichkeiten, welche die erfindungsgemäss eingesetzten Pressprofile bieten, die Bodenelemente mit längslaufenden Führungsnuten versehen. Damit können Schrauben zur Befestigung der Holzplanken verankert werden.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt in

Fig. 1    einen vereinfachten Querschnitt durch das Untergestell eines Eisenbahngüterwaggons;

Fig. 2    einen Querschnitt durch die Seitenpartie des Untergestells mit Langträger, Untergurt und Holzbeplankung;

Fig. 3    einen Querschnitt durch den Untergurt mit zusätzlich befestigten Waggonteilen;

Fig. 4    einen Querschnitt durch den Langträger mit angebrachtem Achshalter.

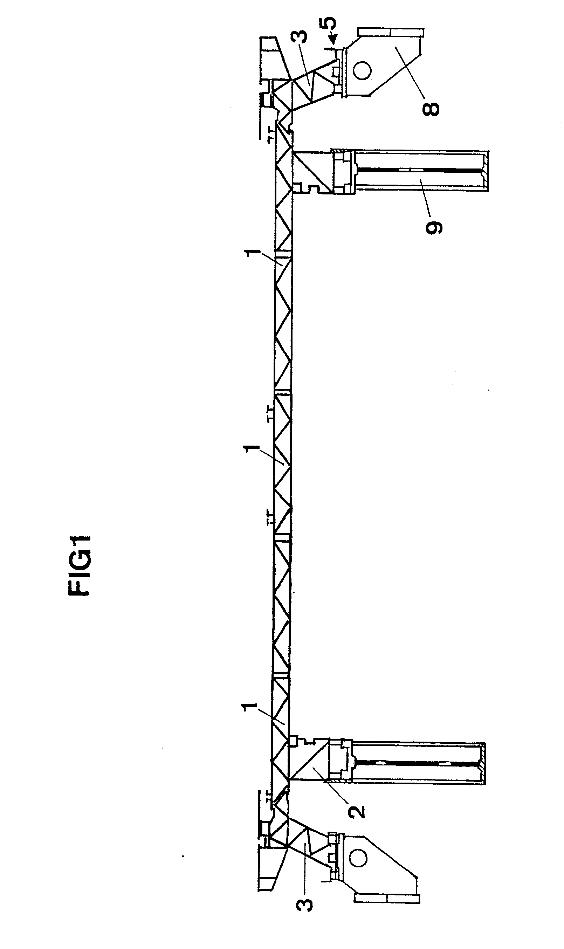

Das Untergestell eines Eisenbahn-Güterwaggons weist nach Fig. 1 einen aus mehreren stranggepressten, längslaufenden Bodenelementen 1 zusammengesetzten Aluminium-Fachwerkboden auf. Unter den äussersten dieser Bodenelemente 1 ist je ein Aluminium-Strangpressprofil in Form eines Mehrkammerhohlprofils als Langträger 2 befestigt; als Befestigung kommt sowohl eine Verschweissung als auch Nieten oder Schrauben in Frage. Seitlich ausserhalb der äussersten Bodenelemente 1 ist je ein Untergurt 3 angebracht. Dieser besteht aus einem Aluminium-Strangpressprofil mit Fachwerkstruktur und verläuft, wie auch die Langträger 2 und Bodenelemente 1 im wesentlichen über die gesamte Waggonlänge. Im Beispiel der Fig. 1 ist unter dem Langträger 2 ein Fischbauch 9 angebracht; unter dem Untergurt 3 ist ein Rangierhaken 8 befestigt. Zwischen dem Untergurt 3 und dem Rangierhaken 8 ist eine Halteschiene 5 angeordnet.

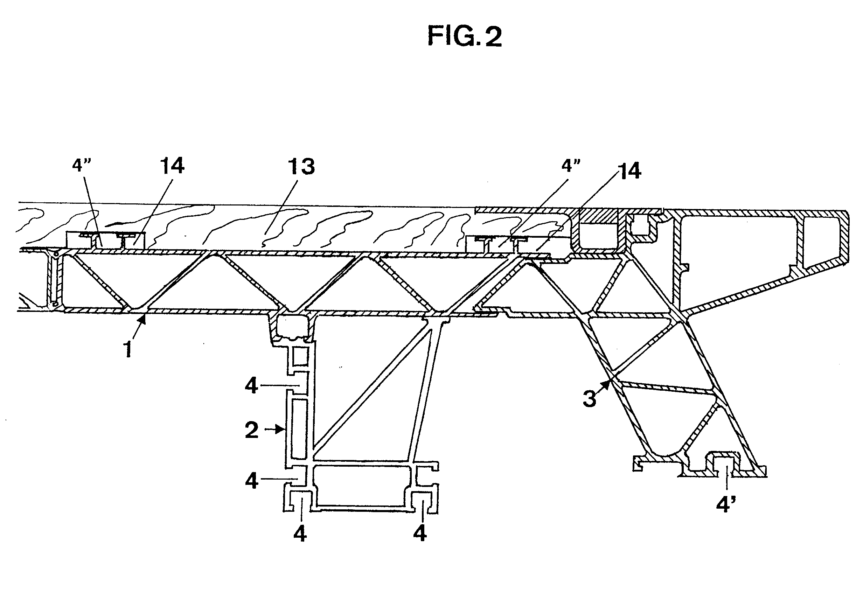

Zur Schraubbefestigung weiterer Waggonteile weisen Langträger 2 und Untergurt 3 -- dargestellt in Fig. 2 -- integrierte Schraubennuten 4 bzw. 4' auf.
Die Bodenelemente 1 sind mit Holzplanken 13 bedeckt. Diese sind mit Belüftungsnuten 14 versehen, welche zudem der Aufnahme der an der Oberseite der Bodenelemente 1 ausgebildeten Schraubennuten 4" dienen. Mit Hilfe dieser Schraubennuten 4" lassen sich Schrauben zur Befestigung der Holzplanken 13 verankern.

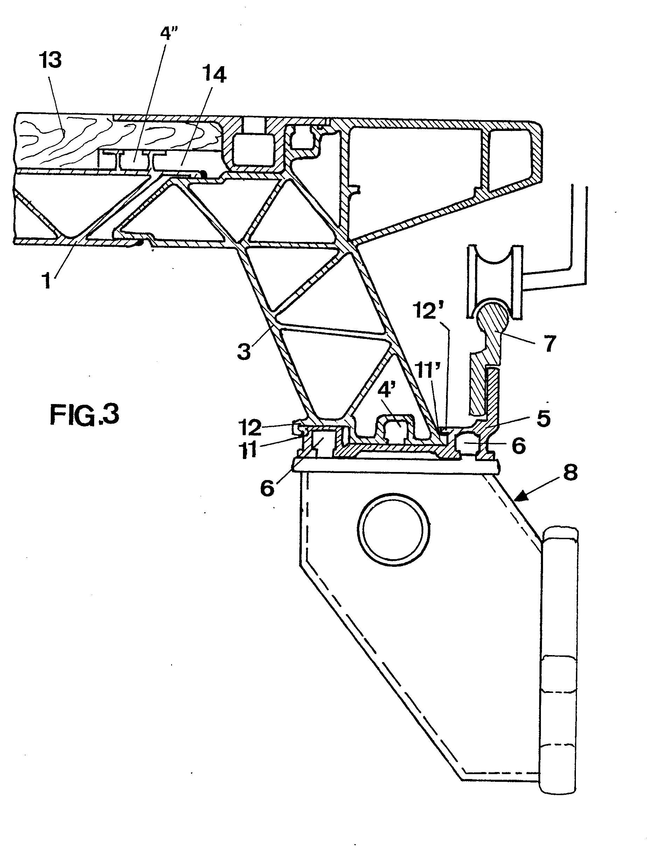

Die Fig. 3 zeigt die Befestigung eines Rangierhakens 8 sowie einer Schiebetürenschiene 7 an der Halteschiene 5. Die Halteschiene 5 besteht aus einem Aluminium-Strangpressprofil, welches im wesentlichen über die gesamte Waggonlänge verläuft und am Untergurt 3 mittels Schrauben, welche in der Schraubennut 4' verankert sind, befestigt ist. Um die entsprechenden Schrauben nicht Zugspannungen auszusetzen, ist die Halteschiene 5 und die Unterseite des Untergurts 3 derart ausgestaltet, dass die Halteschiene 5 genügend in die Unterseite des Untergurts 3 eingeschoben werden kann, um von diesem getragen zu werden. Hierzu weist die Halteschiene 5 eine Nase 11 und eine Nut 12' auf, welche mit der Nut 12 bzw. der Nase 11' des Untergurts 5 formschlüssig sind.

Der Rangierhaken 8 wird mittels Schrauben an der Halteschiene 5 befestigt, welche hierzu mit Schraubennuten 6 ausgestattet ist.

Die Schiebetürenschiene 7 ist an einer Seitenpartie der Halteschiene 5 angebracht.

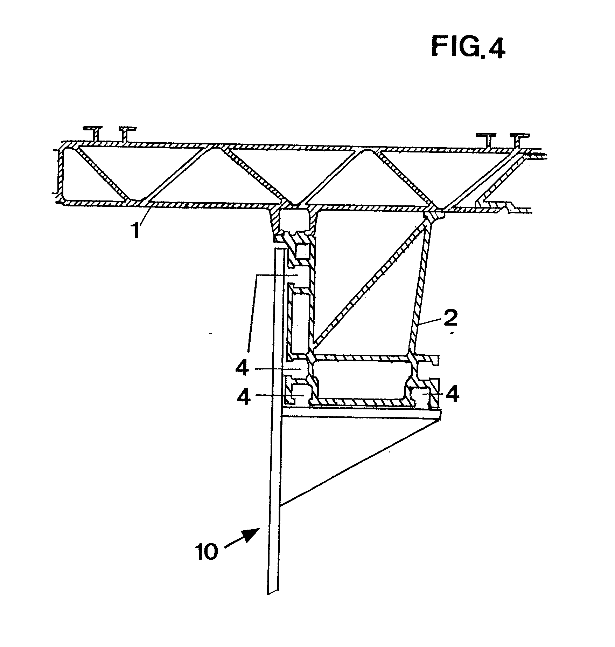

In der Fig. 4 ist die Befestigung des Achshalters 10 am Langträger 2 dargestellt. Dieser ist mit mehreren Schraubennuten 4 ausgestattet, welche derart angelegt sind, dass sie teils eine senkrechte und teils eine waagrechte Verschraubung ermöglichen.

0178258

PATENTANSPRUECHE

1. Selbsttragendes Untergestell eines Eisenbahn-Güterwaggons mit auf beiden Längsseiten angeordneten Langträgern und Untergurten,
   dadurch gekennzeichnet,
   dass das Untergestell zwischen den Untergurten (3) angeordnete, aus stranggepressten Aluminium-Fachwerkprofilen bestehende, längslaufende Bodenelemente (1) aufweist, sowie dass die an Bodenelementen (1) befestigten Langträger (2) und die Untergurten (3) aus längslaufenden Aluminium-Strangpressprofilen gebildet sind.

2. Untergestell nach Anspruch 1, dadurch gekennzeichnet, dass die Langträger (2) und die Untergurten (3) zur Schraubbefestigung weiterer Waggonteile, beispielsweise des Fischbauchs (9) oder der Achshalter (10), mit Schraubennuten (4) versehen sind.

3. Untergestell nach Anspruch 2, dadurch gekennzeichnet, dass an der Unterseite der Untergurten (3) je eine, aus einem stranggepressten Aluminiumprofil gebildete, mit Schraubennuten (6) zur Schraubbefestigung weiterer Waggonteile, beispielsweise Schiebetürenschienen (7) oder Rangierhaken (8), versehene Halteschiene (5) angeschraubt ist.

4. Untergestell nach Anspruch 2 oder 3, dadurch gekennzeichnet, dass die Strangpressprofile der Langträger (2), Untergurten (3) und Halteschienen (5) im Bereich der Schraubverbindungsstellen derart ausgebildet sind, dass die in den Schraubennuten (4, 6) eingesetzten

0178258

Schrauben axial nicht auf Zug beansprucht sind.

5. Untergestell nach Anspruch 3 oder 4, dadurch gekennzeichnet, dass die Unterseite des Untergurtes (3) und die anliegende Seite der Halteschiene (5) paarweise Nasen (11, 11') und Nuten (12, 12') zum Einschieben der Halteschiene (5) in den Untergurt (3) aufweisen.

6. Untergestell nach wenigstens einem der Ansprüche 1 bis 5, dadurch gekennzeichnet, dass die Langträger (2) zur Schraubbefestigung der Achshalter (10) sowohl an der waagrechten Unterseite als auch an einer senkrechten Seitenfläche mit Schraubennuten (4) versehen sind.

7. Untergestell nach wenigstens einem der Ansprüche 1 bis 6, dadurch gekennzeichnet, dass im Bereich der Achshalter (10) Querträger angeschraubt sind.

8. Untergestell nach wenigstens einem der Ansprüche 1 bis 7, dadurch gekennzeichnet, dass die Bodenelemente (1) mit einer Holzbeplankung (13) bedeckt sind, welche an ihrer Unterseite längslaufende Belüftungsnuten (14) aufweist.

9. Untergestell nach wenigstens einem der Ansprüche 1 bis 8, dadurch gekennzeichnet, dass die Bodenelemente (1) an ihrer Oberseite mit längslaufenden Schraubennuten (4") versehen sind, in welchen Schrauben zur Befestigung der Holzbeplankung (13) verankert sind.

# FIG1

# FIG.2

FIG.3

# FIG. 4

Europäisches
Patentamt

**EUROPÄISCHER RECHERCHENBERICHT**

0178258

Nummer der Anmeldung

EP 85 81 0447

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 063 214 (MESSERSCHMITT) * Seite 2, Zeilen 22-28; Seite 3, Zeilen 17-19; Figuren 1,2,5 * | 1 | B 61 F 1/00 B 62 D 25/20 B 61 D 17/10 |
| A | DE-A-2 908 823 (MESSERSCHMITT) * Insgesamt * | 1 | |
| A | DE-A-3 309 736 (M.A.N.) * Insgesamt * | 1 | |
| A | CH-A- 392 284 (SCHWEIZERISCHE ALUMINIUM) * Seite 1, Zeilen 43-51; Figuren 2,3 * | 1 | |
| A | US-A-3 420 192 (THE DOW CHEMICAL CO.) * Insgesamt * | 1 | RECHERCHIERTE SACHGEBIETE (Int. Cl.4) |
| A | US-A-4 049 285 (FRUEHAUF CORP.) | 1 | B 61 F B 62 D B 61 D |

Der vorliegende Recherchenbericht wurde für alle Patentansprüche erstellt.

| Recherchenort | Abschlußdatum der Recherche | Prüfer |
|---|---|---|
| DEN HAAG | 11-11-1985 | LINTZ C.H. |